# EUROPEAN PATENT APPLICATION

(11) **EP 4 600 206 A1**
(43) Date of publication of application: **13.08.2025**
(21) Application number: 24726910.3
(22) Date of filing: 27.03.2024
(51) Int. Cl.: C01B 25/37, C01B 25/45, H01M 4/58, H01M 10/0525

(54) **TITANIUM-DOPED ANHYDROUS IRON PHOSPHATE MATERIAL, PREPARATION METHOD THEREFOR AND USE THEREOF**

(30) Priority: 22.12.2023 CN 202311785880
(71) Applicant: Hubei Hongrun High-Tech New Materials Co., Ltd., Ezhou, Hubei 436070 (CN); Hubei Wanrun New Energy Technology Co., Ltd., Shiyan, Hubei 442500 (CN)
(72) Inventor: HUANG, Tianyu, Ezhou, Hubei 436070 (CN); GUO, Miyan, Ezhou, Hubei 436070 (CN); ZHANG, Wei, Ezhou, Hubei 436070 (CN); LI, Jin, Ezhou, Hubei 436070 (CN); HAN, Jie, Ezhou, Hubei 436070 (CN)
(74) Representative: Casalonga
(86) International application number: PCT/CN2024/084214
(87) International publication number: WO 2025/129838

(57) **Abstract**

This disclosure provides a titanium doped anhydrous ferric phosphate material, a preparation method and a use thereof, which belongs to the technical field of preparation of ferric phosphate materials. The preparation method of the titanium doped anhydrous ferric phosphate material includes the following steps: providing a titanium containing ferrous sulfate raw material solution and a titanium free ferrous sulfate raw material solution; mixing the titanium containing ferrous sulfate raw material solution and the titanium free ferrous sulfate raw material solution to obtain a mixed solution; mixing the mixed solution with an oxidant and a phosphorus source to obtain a slurry containing ferric phosphate and titanium phosphate; and subjecting the slurry to aging, rinsing, drying, and sintering sequentially to obtain the titanium doped anhydrous ferric phosphate material. In this disclosure, the control in doping of titanium element in the titanium doped anhydrous ferric phosphate material can be achieve by adjusting the mixing ratio of the titanium containing ferrous sulfate raw material solution and the titanium free ferrous sulfate raw material solution, so that the content of titanium element in the final product is stable and controllable; the titanium doped anhydrous ferric phosphate material has a uniform nanoscale particle stacking morphology, which is conducive to the application of preparing battery materials.

## Description

### Cross-Reference to Related Disclosure

This disclosure claims the priority of a Chinese patent application submitted to the Patent Office of the People's Republic of China on December 22, 2023, with application No. 2023117858803 and titled "A titanium doped anhydrous ferric phosphate material, a preparation method and a use thereof", the content of which is incorporated in this disclosure by reference in its entirety.

### Technical Field

This disclosure relates to the field of preparation technology for ferric phosphate materials, in particular to a titanium doped anhydrous ferric phosphate material, a preparation method and a use thereof. It is mainly a method of utilizing the waste titanium element in the titanium dioxide byproduct to prepare the titanium doped anhydrous ferric phosphate with controllable content of titanium, which is conducive to the disclosure of preparing battery materials.

### Background

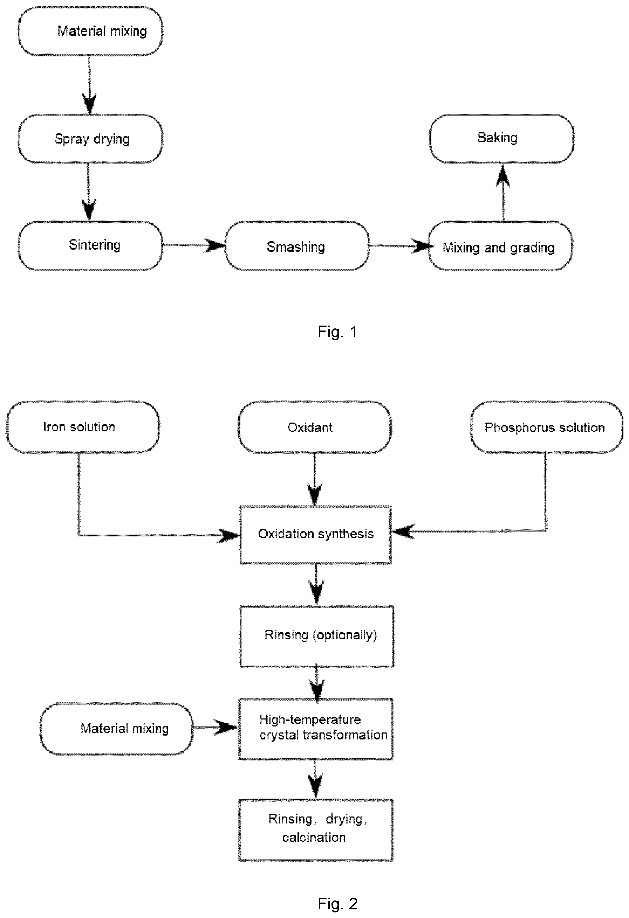

Anhydrous ferric phosphate is a precursor material for lithium iron phosphate, which is currently one of the mainstream cathode electrode materials for batteries. The process of preparing lithium iron phosphate by solid phase method is as shown in Figure 1, which generally includes processes of material mixing, spray drying, sintering, smashing, mix grading and baking. Figure 2 shows the conventional preparation process of ferric phosphate, which mainly includes using iron solution, phosphorus solution, and an oxidant for oxidation synthesis, and performing high-temperature crystal transformation, drying, and calcination to obtain the anhydrous ferric phosphate. In the modification research of ferric phosphate battery materials, due to the d2sp3 hybridization mode of both titanium element and iron element, although the stable crystal structures of titanium phosphate and ferric phosphate are different, when titanium element (Ti) is added as a doping agent to ferric phosphate, it can be arranged in the crystal in the same rule as iron element. At present, it is widely believed that the modification effect of titanium doping on ferric phosphate/lithium iron phosphate includes: 1) under the same cell parameter conditions, titanium element with a smaller radius makes the electron migration channel wider; 2) due to the introduction of heterologous elements, the growth of crystals after nucleation is hindered, which can effectively reduce their primary particles, which is reflected by the electrical performance, i.e. a significant improvement in the high rate performance of the produced battery and a significant decrease in impedance.

Wherein, the doping nodes of titanium element can be divided into: 1) introducing the titanium element during the production of lithium iron phosphate by a solid phase method; 2) introducing the titanium element during the production of ferric phosphate. The first doping node 1) usually uses rutile titanium dioxide with better reactivity for high-temperature solid phase reactions with other materials, but this reaction process requires a large amount of heat energy and uninterrupted mechanical grinding.

As a substitute doping element at iron site, titanium element is introduced in an ionic form in the preparation process of ferric phosphate in the second doping node 2), and there is almost no increase in energy consumption during the production process, making it a more ideal doping method, but there are many influencing factors. In the process of preparing ferric phosphate compounds, the titanium dioxide byproduct, i.e., ferrous sulfate heptahydrate, is commonly used as the source of iron element. Due to this byproduct is crystallized from the acidolysis solution of ilmenite, it will attach with a certain amount of titanium element. Most enterprises that use this route to produce ferric phosphate will remove this part of titanium element by increasing pH (adding an alkali or elemental iron for reacting with acid) when preparing the iron source solutions. When this route is used, it is necessary to further add titanium containing materials to prepare titanium doped ferric phosphate products, and the quality of the products needs to be further improved.

### Summary

In view of the technical problems in the background technology, this disclosure provides titanium doped anhydrous ferric phosphate material, a preparation method and a use thereof. The titanium doped anhydrous ferric phosphate material provided in this disclosure has good performance and quality, is easy to prepare, and is conducive to its application in battery materials.

In a first aspect, the embodiment of this disclosure provides a preparation method of a titanium doped anhydrous ferric phosphate material, which includes the following steps:
providing a titanium containing ferrous sulfate raw material solution and a titanium free ferrous sulfate raw material solution;
mixing the titanium containing ferrous sulfate raw material solution and the titanium free ferrous sulfate raw material solution to obtain a mixed solution;
mixing the mixed solution with an oxidant and a phosphorus source to obtain a slurry containing ferric phosphate and titanium phosphate; and
subjecting the slurry to aging, rinsing, drying, and sintering sequentially to obtain the titanium doped anhydrous ferric phosphate material.

In the technical solution of the embodiments of this disclosure, the titanium containing ferrous sulfate raw material solution is mixed with the titanium free ferrous sulfate raw material solution to obtain the mixed solution; afterwards, the obtained mixed solution and a phosphorus source are oxidized to obtain a slurry containing ferric phosphate and titanium phosphate; the slurry is then aged, rinsed, dried, and sintered sequentially to obtain the titanium doped anhydrous ferric phosphate material. Wherein, by mixing the titanium containing ferrous sulfate raw material solution and the titanium free ferrous sulfate raw material solution at a certain proportion, the doping control of titanium element in the final doped ferric phosphate product can be achieved through proportion adjustment, so that the content of titanium element in the prepared titanium doped anhydrous ferric phosphate material is stable and controllable, thereby solving the problem of uncontrollable titanium content in the anhydrous ferric phosphate caused by uneven quality of ferrous sulfate heptahydrate; meanwhile, the titanium doped anhydrous ferric phosphate prepared in the embodiments of this disclosure has a uniform nanoscale particle stacking morphology, which is beneficial for its application.

In some embodiments, materials for preparing the titanium containing ferrous sulfate raw material solution and the titanium free ferrous sulfate raw material solution comprise a titanium dioxide byproduct, and a mass fraction of titanium in the titanium dioxide byproduct is 600 ppm to 4,200 ppm.

In these embodiments, the titanium dioxide byproduct is used as the titanium element introduction source. The main component of the titanium dioxide byproduct is ferrous sulfate heptahydrate, and it is attached with titanium by itself, so that no titanium is needed to be added separately. At the same time, the titanium element is stably present in an ionic form in the titanium dioxide byproduct, which is conducive to improving the quality of the prepared titanium doped anhydrous ferric phosphate and achieving waste utilization.

In addition, the mass fraction of titanium in the titanium dioxide byproduct falls within the range of 600 ppm to 4,200 ppm, which can be used as raw materials for the preparation of titanium doped anhydrous ferric phosphate materials. In this embodiment, there are no excessive restrictions on the source of the titanium dioxide byproduct.

In some embodiments, a preparation step for providing the titanium containing ferrous sulfate raw material solution includes:
dissolving the titanium dioxide byproduct with an acidic aqueous solution, then performing a solid-liquid separation to obtain the titanium containing ferrous sulfate raw material solution;
and/or, a preparation step for providing the titanium free ferrous sulfate raw material solution comprises:
   mixing the titanium dioxide byproduct with a phosphorus containing solution, then performing a solid-liquid separation to obtain the titanium free ferrous sulfate raw material solution;
   wherein the phosphorus containing solution comprises at least one of phosphoric acid or phosphate, and the mass fraction of phosphorus element in the phosphorus containing solution is 1,000 ppm to 3,000 ppm.

In these embodiments, in the preparation process of the titanium containing ferrous sulfate raw material solution, an acidic aqueous solution is used to dissolve the titanium dioxide byproduct. The acidic environment can keep the titanium element from hydrolysis, while in the preparation process of the titanium free ferrous sulfate raw material solution, the phosphorus containing solution is used to dissolve the titanium dioxide byproduct so as to hydrolyze the titanium element.

In some embodiments, pH values of the titanium containing ferrous sulfate raw material solution and the titanium free ferrous sulfate raw material solution are 0.8-1.8, respectively.

In these embodiments, controlling the pH values of the titanium containing ferrous sulfate raw material solution and the titanium free ferrous sulfate raw material solution between 0.8 and 1.8 is beneficial for obtaining a slurry containing ferric phosphate and titanium phosphate through reaction.

In some embodiments, in the step of obtaining the slurry containing ferric phosphate and titanium phosphate, the mixed solution is mixed with the oxidant and the phosphorus source at a molar ratio of iron element to phosphorus element to oxidant of 1:1.01-1.05:0.55-0.65.

In these embodiments, by using this ratio to fully oxidize the mixture, and the prepared slurry containing ferric phosphate and titanium phosphate has a high content of active materials.

In some embodiments, the step of subjecting the slurry to aging, rinsing, drying, and sintering sequentially includes:
heating the slurry to 80°C-98°C, maintaining the temperature for 1 hour-4 hours, and then rinsing with water to obtain a phosphorus containing rinsing solution and a filter cake;
drying the filter cake and then sintering at 550°C -750°C for 1 hour-4 hours to obtain the titanium doped anhydrous ferric phosphate material.

In these embodiments, the phosphorus containing rinsing solution can be used to prepare the titanium free ferrous sulfate raw material solution. On the one hand, it realizes the waste liquid recycling, saves the cost of alkaline reagents, and the ferrous solution that is not consumed in the preparation process of the titanium doped anhydrous ferric phosphate can also be used for the preparation of conventional ferric phosphate, producing no waste. On the other hand, it can achieve impurity removal under the required low pH conditions, which is different from an alkaline reagent that increases the pH value.

In a second aspect, the embodiments of this disclosure provide a titanium doped anhydrous ferric phosphate material, which is prepared by the aforementioned preparation method, wherein the titanium doped anhydrous ferric phosphate material has a crystal structure of an anhydrous ferric phosphate and a nanoscale particle stacking morphology, and the Ti doping amount of the titanium doped anhydrous ferric phosphate material is less than or equal to 2 wt%.

In the technical solution of the embodiments of this disclosure, the content of titanium element in the prepared titanium doped anhydrous ferric phosphate material is stable, and its crystal structure is consistent with that of anhydrous ferric phosphate, the Fe/P molar ratio of the titanium doped anhydrous ferric phosphate material is 0.96-1.01, and it has a nanoscale particle stacking morphology with uniform morphology, which is convenient for subsequent applications.

In some embodiments, the Ti doping amount of the titanium doped anhydrous ferric phosphate material is less than or equal to 1 wt%; in some embodiments, the Fe/P molar ratio of the titanium doped anhydrous ferric phosphate material is 0.96-1.01, and the specific surface area can be 8 m²/g -10 m²/g, making the material properties more favorable for subsequent applications.

In a third aspect, the embodiments of this disclosure provide a cathode electrode sheet, the cathode electrode sheet includes titanium doped lithium iron phosphate as an active material, which is prepared from the aforementioned titanium doped anhydrous ferric phosphate.

In these embodiments, the titanium doped anhydrous ferric phosphate material can be used as a precursor to prepare ferric phosphate cathode electrode materials. The cathode electrode material is prepared from the above titanium doped anhydrous ferric phosphate and the ion battery source, specifically the titanium doped lithium ferric phosphate active material, and thus it has the advantages of stable quality and good performance, etc. By using the cathode electrode battery material of this embodiment, corresponding high-performance battery sheets and devices thereof are assembled.

In a fourth aspect, the embodiments of this disclosure provide a secondary battery comprising the aforementioned cathode electrode sheet.

In these embodiments, the secondary battery includes the aforementioned cathode electrode sheet, thus having the advantages of stable quality and good performance.

In a fifth aspect, the embodiments of this disclosure provide an electrical device comprising the aforementioned secondary battery.

In these embodiments, the electrical device includes the aforementioned secondary battery, thus having the advantages of stable quality and good performance.

The above descriptions are only an overview of the technical solutions of this disclosure. In order to have a clearer understanding of the technical means of this disclosure, and implement same according to the contents of the specification and in order to make the above and other purposes, features, and advantages of this disclosure more obvious and easy to understand, the specific embodiments of this disclosure are specifically listed below.

### Brief Description of the Drawings

In order to more clearly explain the technical solutions of this disclosure, a brief introduction will be given below to the accompanying drawings required to be used in the descriptions of examples or existing technologies. It is obvious that the accompanying drawings in the descriptions below only illustrate a part of examples or some embodiments of this disclosure, and for those ordinarily skilled in the art, other accompanying drawings can also be obtained based on these accompanying drawings without paying creative efforts.
Figure 1 shows the process of preparing lithium iron phosphate using a existing solid-phase method;
Figure 2 shows a conventional preparation process of ferric phosphate;
Figure 3 shows a schematic diagram of the process for preparing the titanium doped anhydrous ferric phosphate materials in some embodiments of this disclosure;
Figure 4 shows the XRD spectrum of the final product sample in example 1 of this disclosure; and
Figure 5 shows the SEM image of the final product sample in example 1 of this disclosure.

### Detailed Description of the Embodiments

The embodiments of the technical solutions of this disclosure will be described in detail below in conjunction with the accompanying drawings. The following embodiments are only intended to provide a clearer explanation of the technical solutions of this disclosure, and therefore they are only used as examples and rather than as limitations to the scope of protection of this disclosure.

Unless otherwise defined, all technical and scientific terms as used herein have the same meanings as those commonly understood by those skilled in the technical field of this disclosure; the terms as used herein are only intended for the purpose of describing specific embodiments rather than limiting this disclosure; and the terms "including" and "having" in the description and claims, as well as the accompanying drawings of this disclosure, and any variations thereof, are intended to cover non-exclusive inclusion.

In the description of embodiments of this disclosure, the technical terms "first" and "second", etc., are only used to distinguish different objects and cannot be understood as indicating or implying relative importance or implicitly indicating the number, specific order or primary and secondary relationships of the indicated technical features. In the description of embodiments of this disclosure, "multiple" means more than two, unless otherwise specifically defined explicitly.

Reference to "embodiments" herein means that specific features, structures, or characteristics described in combination with embodiments may be included in at least one embodiment of this disclosure. The phrase appearing at various positions in the specification does not necessarily refer to the same embodiment, nor is it an independent or alternative embodiment mutually exclusive with other embodiments. Those skilled in the art will explicitly and implicitly understand that the embodiments described herein can be combined with other embodiments.

In the description of the embodiments of this disclosure, the term "and/or" is only used to describe an association relationship describing the associated objects, indicating that there can be three kinds of relationships, for example "A" and/or "B" may indicate three cases: existence of "A" alone, coexistence of "A" and "B", and existence of "B" alone. In addition, the character "/" as used herein generally indicates an "or" relationship between the front and back associated objects.

In the description of the embodiments of this disclosure, the term "multiple" refers to more than two (including two), similarly, "multiple groups" refers to more than two groups (including two groups), and "multiple pieces" refers to more than two pieces (including two pieces).

In the description of the embodiments of this disclosure, if the orientation and position relationships indicated by the technical terms "centre", "lengthwise", "crosswise", "length", "width", "thickness", "up", "down", "front", "back", "left", "right", "vertical", "horizontal", "top", "bottom", "inside", "outside", "clockwise", "counterclockwise", "axial", "radial" and "circumferential", etc., are based on the orientation or position relationship as shown in the accompanying drawings, it is only for the convenience of describing the embodiments of this disclosure and simplifying the description, rather than indicating or implying that the device or element referred to thereby must have a specific orientation and be constructed and operated in a specific orientation, and thus it cannot be understood as limitations on the embodiments of this disclosure.

In the description of the embodiments of this disclosure, unless otherwise specified and limited, the terms "installation", "interconnection", "connection", "fixation", and the like should be understood in a broad sense, for example, it can be either fixed connection, or detachable connection, or integrated connection; it can be either mechanical connection or electrical connection; and it can be either direct connection, or indirect connection through intermediate media, or it can be the internal communication between two components or the interaction between two components. For those ordinarily skilled in the art, the specific meanings of the above terms in the embodiments of this disclosure can be understood according to the specific situations.

At present, doping methods of titanium element mainly include the following two ways: 1) exogenous introduction, i.e. adding titanium containing materials; 2) in the preparation and production of ferric phosphate, the iron source material is usually ferrous sulfate heptahydrate, a titanium dioxide byproduct, which is attached with some residual ilmenite extract by itself during crystallization separation, part of titanium element can be introduced into the anhydrous ferric phosphate. The first way needs to add a new raw material and a raw material adding step. At the same time, since the design value of titanium content in the final product is often less than 1%, and the titanium element is difficult to exist stably in the aqueous solution, it will be difficult to reverse if hydrolysis occurs, and the subsequent doping will also change from iron site substitution to solid-phase hybrid, resulting in difficult design of feeding mode. For example, in CN111908441A, a mixed solution of ferrous sulfate and iron filings in phosphoric acid is used as the base solution, and a titanium salt solution is introduced exogeneously to forms titanium phosphate, and then hydrogen peroxide and an alkali are added dropwise to precipitate the ferric phosphate and form a coating on titanium phosphate.

The second way has no newly added raw materials, is of cost efficiency, and can reduce the amount of waste residues generated in the production of iron salt, changing waste materials into things of value, which is more in line with the concept of energy conservation and emission reduction. However, it also has the defect of unstable content, due to different titanium dioxide manufacturers have different treatment methods and limits for byproducts, resulting in different pH, content of titanium and main content of solid ferrous sulfate heptahydrate. Due to titanium element has amphoteric nature and is easy to form metatitanic acid, it is often necessary to retain all soluble titanium when retaining the titanium element in the solid ferrous iron. At the same time, since ferric phosphate is prepared by liquid phase precipitation method, insoluble titanium element precipitates need to be filtered out during the preparation of iron salt. Due to the above reasons, the titanium element doped into the anhydrous ferric phosphate is completely affected by ferrous sulfate heptahydrate. Therefore, at present, the manufacturers producing titanium containing ferric phosphate in this way only use the solid ferrous iron provided by the same titanium dioxide manufacturer, in order to obtain stable content of titanium element in anhydrous ferric phosphate.

In order to solve the technical problems of preparation by additionally adding titanium containing materials or high energy consumption in the prior art, and the need of improving product quality, this disclosure first provides a preparation method of titanium doped anhydrous ferric phosphate material, which includes the following steps:
S1, providing a titanium containing ferrous sulfate raw material solution and a titanium free ferrous sulfate raw material solution;
S2, mixing the titanium containing ferrous sulfate raw material solution and the titanium free ferrous sulfate raw material solution to obtain a mixed solution;
S3, mixing the mixed solution with an oxidant and a phosphorus source to obtain a slurry containing ferric phosphate and titanium phosphate; and
S4, subjecting the slurry to aging, rinsing, drying, and sintering sequentially to obtain the titanium doped anhydrous ferric phosphate material.

Specifically, in step S1, it is needed to provide titanium containing ferrous sulfate raw material solution (hereinafter referred to as the first ferrous solution) and the titanium free ferrous sulfate raw material solution (hereinafter referred to as the second ferrous solution), wherein the first ferrous solution is obtained by dissolving the titanium dioxide byproduct in an acidic aqueous solution and then performing a solid-liquid separation; and the second ferrous solution is obtained by mixing the titanium dioxide byproduct with a phosphorus containing solution, and then performing a solid-liquid separation, and the phosphorus containing solution includes at least one of phosphoric acid or phosphate.

Wherein, the raw materials for preparing the first ferrous solution and the second ferrous solution are preferably titanium dioxide byproduct, the main component of which is ferrous sulfate heptahydrate, and also contains a small amount of titanium element, which is generally solid powder or powder. As for the selection of titanium dioxide byproduct, all materials available in the market can be used, in which the content of titanium element is preferably in the range of 600 ppm to 4,200 ppm (by mass fraction, parts per million), more preferably in the range of 2,000 ppm to 4,000 ppm. It should be noted that the titanium dioxide byproduct usually contains very few metal elements such as aluminum, potassium, magnesium and manganese, etc., as well. For example, the main content of titanium dioxide byproduct (in terms of ferrous sulfate heptahydrate) is more than or equal to 80%, preferably more than or equal to 85%; the pH value (in terms of dissolving 10 g solid in 100 g water) is 2.5-3.25; in addition, the cationic impurity indexes are: less than 20 ppm of lead (Pb), less than 100 ppm of nickel (Ni), less than 65 ppm of chromium (Cr), less than 20 ppm of copper (Cu), and less than 100 ppm of zinc (Zn).

Further, in this embodiment, the titanium dioxide byproduct is dissolved in an acidic aqueous solution, and then the solution is subjected to solid-liquid separation to obtain the first ferrous solution. For example, the concentrated sulfuric acid can be diluted into dilute sulfuric acid solution with water, stirred for 5-10 minutes to ensure uniformity, and then the titanium dioxide byproduct is added, and stirred for 10-15 minutes to disperse and dissolve evenly. Wherein, the weight ratio of the titanium dioxide byproduct to water can be 1:1.0-2.0; the molar ratio of the titanium dioxide byproduct to sulfuric acid can be 32-40:1, and the pH value of the first ferrous solution obtained should be in the range of 0.8-1.8. Preferably, a filter press is used for solid-liquid separation to separate the foreign matters such as dust, silts, plastic film, etc., and insoluble compounds (mainly titanate) carried in the solid ferrous iron, the filtered first ferrous solution contains titanium ions, sulfate ions, and ferrous ions, etc.

Further, in this embodiment, the titanium dioxide byproduct is mixed with the phosphorus containing solution, and then the solution is subjected to solid-liquid separation to obtain the second ferrous solution, the components of the phosphorus containing solution include one or more of phosphoric acid and phosphate. Preferably, a phosphorus containing rinsing solution (or phosphoric acid, ammonium phosphate salt, sodium phosphate salt, etc.) is mixed with water to prepare a phosphorus containing solution with a mass fraction of phosphorus element of 1,000 ppm to 3,000 ppm. Specifically, in the embodiments of this disclosure, the phosphorus containing solution is added to a reactor, and the titanium dioxide byproduct powder is added to the reactor after the stirring is started, with a mass ratio of titanium dioxide byproduct to phosphorus containing solution being 1:1.0-2.0; after the addition is completed, the mixture is stirred for 10-15 minutes to make the reaction uniform, which involves the reaction: 3Ti⁴⁺+4PO₄³⁻→Ti₃(PO₄)₄; the pH value of the second ferrous solution obtained should be in the range of 0.8-1.8. After the reaction is completed, the solid-liquid separation is carried out to obtain the ferrous solution without titanium element, that is, the second ferrous solution.

In the preparation process of the above first ferrous solution, the acidic environment can keep the titanium element from hydrolysis; in the preparation process of the second ferrous solution, it is preferred to use the phosphorus containing rinsing solution and pure water to prepare the dissolution solution, which can not only recycle the waste liquid, but also ensure the low pH value of the ferrous solution after impurity removal, avoiding the risk of hydrolysis of titanium element during the subsequent mixing, so as to prepare the second ferrous solution.

In step S2, the first ferrous solution and the second ferrous solution are mixed to obtain a mixed solution. In this embodiment, by adjusting the mixing ratio of the first ferrous solution to the second ferrous solution, the design of controlling the titanium content in the final product within the range of 0-2% can be achieved, which is convenient to solve the problem of uncontrollable titanium content in the anhydrous ferric phosphate caused by uneven quality of ferrous sulfate heptahydrate. For example, the first ferrous solution and the second ferrous solution can be mixed at the mass ratio of 4:1 or 1:4.

Specifically, in step S3, the mixed solution is mixed with an oxidant and a phosphorus source to obtain a slurry containing ferric phosphate and titanium phosphate. Wherein, the phosphorus source is also prepared in this embodiment, involving formulating the phosphorus containing material and water into a solution with a mass fraction of phosphorus of 6%-18%. The phosphorus containing material includes but is not limited to phosphoric acid, ammonium phosphate salt, and sodium phosphate salt, etc.

In step S3, in this embodiment, stirring can be started during the mixing process of the mixed solution with oxidant and phosphorus source, and the stirring frequency is related to the stirring equipment and reaction volume, as long as it conforms to the principle of sufficient dispersion and no splashing out of the reaction vessel. For example, the oxidant (commonly used hydrogen peroxide) and the phosphorus source are added to the mixed solution at the same time with the addition time being controlled at 20-60 minutes. Here, the proportion of each material is calculated in terms of mole number, and the molar ratio thereof is preferably n iron element: n phosphorus (P) element: n hydrogen peroxide (H₂O₂)=1:1.01-1.05:0.55-0.65. This reaction method can ensure the uniform dispersion of titanium element in the slurry. After the addition is completed, the yellow slurry can be obtained in this embodiment, which contains the generated ferric phosphate and titanium phosphate.

The reactions involved include:

2Fe²⁺+H₂O₂+HPO₄²⁻+H₂PO₄⁻→2FePO₄↓+2H₂O+H⁺;

3Ti⁴⁺+4PO₄³⁻→+Ti₃(PO₄)₄.

Specifically, in step S4, the slurry is subjected to aging, rinsing, drying, and sintering sequentially; wherein, in this embodiment, aging can be carried out under the condition of keeping stirring to realize crystal transformation. It is preferred to heat the obtained slurry to 80°C-98°C (more preferably 92°C-95°C) in the reactor, the temperature is maintained for 1 hour-4 hours to realize high-temperature crystal transformation, which is then filtered at the end of the heat preservation.

In step S4, phosphoric acid at a mole number of 10%-30% of the ferric phosphate can be added during aging to accelerate the transformation rate. After aging, rinsing is also included. The impurities in the slurry precipitation are removed by water washing and then filtered to obtain the precipitate and the phosphorus containing rinsing solution (which can be rinsed until the conductivity of the newly filtered rinsing water is not higher than 200 µs/cm); the phosphorus containing rinsing solution is used to provide titanium free ferrous sulfate raw material solution, that is, it can be recovered and used for the preparation of phosphorus containing solution. The embodiment of this disclosure can use the phosphorus containing rinsing solution to prepare the above second ferrous solution, which can not only maintain the low pH value of the solution, but also realize the secondary utilization of the waste liquid.

In step S4, the filter cake is dried, and the drying is preferably carried out by oven-drying. That is, the rinsed filter cake is oven-dried and subjected to water controlling. After drying, the filter cake is sintered at 550°C-750°C for 1 hour-4 hours, the heating rate can be controlled at 3°C/min-5°C/min. After the completion of sintering, the titanium doped anhydrous ferric phosphate material is obtained.

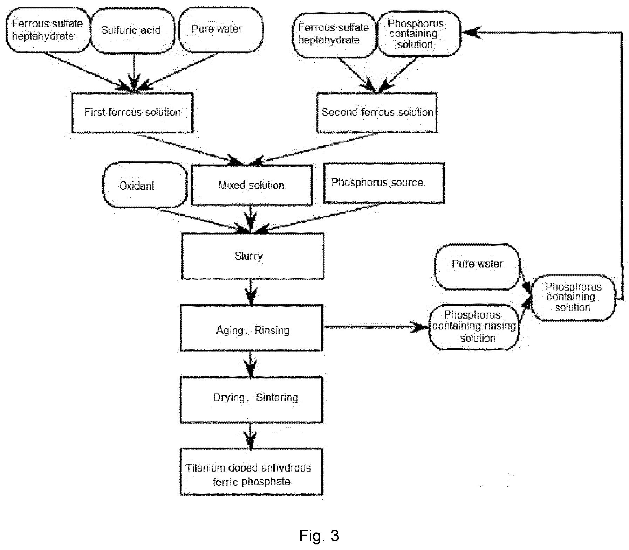

Further, in combination with the content shown in the schematic diagram of the process for preparing the titanium doped anhydrous ferric phosphate materials in Figure 3, in the embodiments of this disclosure, firstly, the ferrous sulfate heptahydrate, sulfuric acid and water are prepared into the first ferrous solution, and then the ferrous sulfate heptahydrate and phosphorus containing solution are prepared into the second ferrous solution. Secondly, the first ferrous solution and the second ferrous solution are mixed to obtain a mixed solution. Then, the mixed solution is mixed with an oxidant and a phosphorus source to obtain the slurry containing ferric phosphate and titanium phosphate. Finally, the obtained slurry is subjected to aging, and rinsing, sequentially, and the filter cake and phosphorus containing rinsing solution are obtained respectively after the rinsing. The obtained filter cake is dried and sintered sequentially to prepare the titanium doped anhydrous ferric phosphate material, while the phosphorus containing rinsing solution is mixed with water to prepare the phosphorus containing solution, which can be reused as the ingredient of the second ferrous solution. The yield of the titanium doped ferric phosphate prepared in the embodiment of this disclosure is more than 99%, and the titanium element in the titanium dioxide byproduct, i.e., ferrous sulfate heptahydrate can be recycled at the same time, achieving the reduction in waste and saving in raw materials, and changing waste materials into things of value. The method of this disclosure can obtain titanium element doped anhydrous ferric phosphate, which has good performance and quality, meanwhile the preparation energy consumption of which is low.

Secondly, the embodiments of this disclosure provide a titanium doped anhydrous ferric phosphate material, which is prepared by the aforementioned preparation method, and has a crystal structure of an anhydrous ferric phosphate and a nanoscale particle stacking morphology, the titanium doped anhydrous ferric phosphate material has a Fe/P molar ratio of 0.96-1.01 and a Ti doping amount of less than or equal to 2 wt%.

In some embodiments of this disclosure, the Ti doping amount of the titanium doped anhydrous ferric phosphate material is less than or equal to 1 wt%, which can be prepared by the aforementioned preparation method. Moreover, the specific surface area of the titanium doped anhydrous ferric phosphate material can be 8 m²/g-10 m²/g.

The content of titanium element in the titanium doped anhydrous ferric phosphate material according to the embodiments of this disclosure is stable, its crystal structure is consistent with that of anhydrous ferric phosphate (as analysed based on X-ray diffraction patterns), and it has a nanoscale particle stacking morphology (as analysed based on scanning electron microscope images), the sample material has uniform morphology, which is convenient for subsequent product applications.

Furthermore, the embodiments of this disclosure also provide use of the aforementioned titanium doped anhydrous ferric phosphate material in the preparation of electrode materials and batteries, specifically in the preparation of cathode electrode sheet, secondary batteries, and electrical devices. The titanium doped anhydrous ferric phosphate material can be used as a precursor to prepare ferric phosphate cathode electrode materials. The cathode electrode material is prepared from the above titanium doped anhydrous ferric phosphate and the ion battery source such as lithium salt. By using the cathode electrode battery material of this embodiment, corresponding battery sheets and devices and apparatus thereof are assembled. The preparation of the electrode materials and batteries according to the embodiments of this disclosure is a conventional preparation method in the art. By preparing a precursor material, the technical effect of stable quality can be achieved, and the performance of cathode electrode sheets, secondary batteries, and electrical devices can also be improved.

In some embodiments of this disclosure, the secondary battery can serve as an operating power source, driving power source, etc. for the electrical device, and it can include multiple battery cells, which can be connected in series, in parallel, or in series-parallel. The battery cells can be in the form of cylindrical, flat, rectangular, or other shapes, etc. The secondary battery may also include a bus component for achieving electrical connection between multiple battery cells.

The electrical devices provided in the embodiments of this disclosure may include but are not limited to mobile phones, pads, laptops, electric toys, electric tools, electromobiles, electric vehicles, ships, and spacecraft, etc. Among them, electric toys can include stationary or mobile electric toys, such as game consoles, electric car toys, electric ship toys, and electric airplane toys, etc., while spacecraft can include airplanes, rockets, space shuttles, and spaceships, etc.

Some specific embodiments are listed below. It should be noted that the embodiments described below are exemplary and are only intended to explain this disclosure, which cannot be understood as limitations to this disclosure. If no specific technology or conditions are indicated in the examples, the technology or conditions described in the literature in the art or the product specification shall be followed. The reagents or instruments used of which the manufacturers are not indicated are conventional products that are commercially available.

### Example 1:

1. Preparation of first ferrous solution: 7 kg of pure water was added to a reactor, then 50 g concentrated sulfuric acid (75 wt%) was added to the reactor for dilution, stirred for 10 minutes, and then 3.5 kg of ferrous sulfate heptahydrate was added, and stirred for 15 minutes. The ferrous sulfate heptahydrate here was a titanium dioxide byproduct sold by LOMON CORPORATION (see table 1 below for compositions). After dispersion and dissolution were completed, the pH value of the solution was measured to be 1.707, and the solution after filtration was the first ferrous solution.

**Table 1 Detection results of titanium dioxide byproduct**

| Main content (ppm) | Fe³⁺ (ppm) | pH | Cationic impurities (ppm) | | | | | | | | | | | | | |
|---|---|---|---|---|---|---|---|---|---|---|---|---|---|---|---|---|
| | | | Al | Ca | Cd | Co | Cr | Cu | K | Mg | Mn | Na | Ni | Pb | Ti | Zn |
| 84.03 | 464.57 | 2.48 | 47.43 | 27.97 | 0.07 | 40.95 | 1.89 | 0.35 | 17.11 | 4117.31 | 875.57 | 57.25 | 20.97 | 6.33 | 1285 | 47.24 |

2. Preparation of phosphorus containing solution and second ferrous solution: 20 kg of phosphorus containing rinsing solution collected from a phosphate iron company in Hubei was mixed with 10 kg of pure water to prepare a phosphorus containing solution; 7 kg of the phosphorus containing solution was added to the reactor, stirring was started, and then 3.5 g of ferrous sulfate heptahydrate was added to the reactor, the ferrous sulfate heptahydrate here was a titanium dioxide byproduct sold by LOMON CORPORATION, the reaction was stirred for 10-15 minutes, and the pH value was measured to be 1.401. The reaction was filtered to obtain the second ferrous solution.
3. Preparation of phosphorus source: 5 kg of ammonium dihydrogen phosphate was dissolved in 16 kg of pure water, 3 kg of ammonia was added and stirred thoroughly to obtain a phosphorus source. (The materials in steps 1, 2, and 3 were all prepared in excess, and used for other examples and comparative examples).
4. Preparation of mixed solution: the first and second ferrous solutions were mixed at a mass ratio of 4:1, and stirred for 10 minutes to obtain 750 g of mixed solution.
5. Preparation of titanium doped ferric phosphate: 60 g of hydrogen peroxide and 355.96 g of the phosphorus containing solution A were added dropwise simultaneously to a 750 g of mixed solution, with an addition time controlled at 40 minutes. After the addition was completed, a yellow slurry was obtained.
6. Crystal transformation (aging): the stirring was maintained, 10 g of phosphoric acid (86 wt%) was added to the slurry, heated to 95°C) and the temperature was maintained for 2 hours. After the heat preservation was completed, a white slurry was obtained.
7. Rinsing and impurity removal: the impurities were removed from the slurry precipitate by washing with water, and rinsed until the conductivity of the newly filtered rinsing water was not higher than 200 µs/cm, to obtain the phosphorus containing rinsing solution and filter cake.
8. Drying and sintering: The rinsed filter cake was oven-dried at 98°C for 6 hours, and then sintered in a muffle furnace at 700°C for 2 hours with a heating rate controlled at 4°C/min. After the sintering was completed, 114.87 g of the product anhydrous ferric phosphate was obtained.

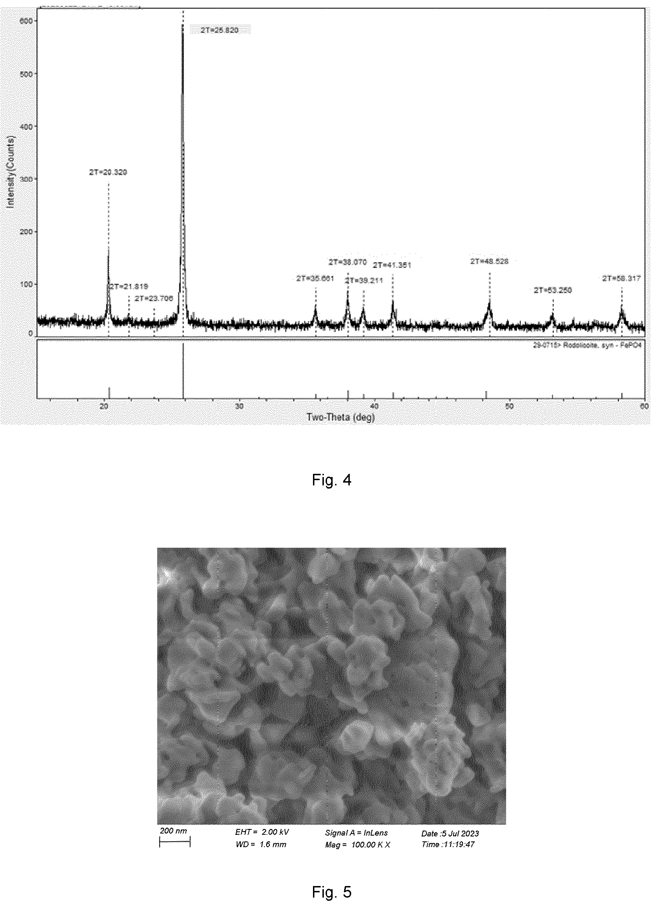

Figures 4 and 5 show the X-ray diffraction (XRD) patterns and scanning electron microscopy (SEM) images of the final product sample in example 1 of this disclosure. By comparing the diffraction peak angles in the XRD patterns with standard cards 29-0715, it can be confirmed that the crystal structure of the sample was consistent with anhydrous ferric phosphate. The SEM image indicates that the sample in example 1 of this disclosure was composed of melted and stacked nanoscale particles.

### Example 2:

The first and second ferrous solutions in Example 1 were also used, but the mixing ratio of the two ferrous solutions in step 4 was adjusted to 1:4. The remaining steps were exactly the same.

### Example 3:

The source of ferrous sulfate heptahydrate in step 1 was changed from LOMON CORPORATION to titanium dioxide byproduct sold by Billion Group, to prepare the first ferrous solution. The subsequent steps were the same as in example 1. The raw material for preparing the second ferrous solution was also the titanium dioxide byproduct sold by LOMON CORPORATION.

### Example 4:

The source of ferrous sulfate heptahydrate in step 2 was changed to titanium dioxide byproduct sold by Billion Group, to prepare the second ferrous solution. Other steps were the same as in example 1. The raw material for preparing the first ferrous solution was also the titanium dioxide byproduct sold by LOMON CORPORATION.

**Table 2 Detection results of titanium dioxide byproduct in example 4**

| Main content (ppm) | Fe³⁺ (ppm) | pH | Cationic impurities (ppm) | | | | | | | | | | | | | |
|---|---|---|---|---|---|---|---|---|---|---|---|---|---|---|---|---|
| | | | Al | Ca | Cd | Co | Cr | Cu | K | Mg | Mn | Na | Ni | Pb | Ti | Zn |
| 84.34 | 445.48 | 2.48 | 34.61 | 11.69 | 0.2 | 31.61 | 1.83 | 0 | 8.2 | 4208.21 | 765.59 | 4.47 | 25.24 | 6.64 | 2586.89 | 34.56 |

### Comparative example 1:

The first ferrous solution in example 1 was also used, but in step 4, the mixed solution was changed to completely using the first ferrous solution.

### Comparative example 2:

When the first ferrous solution was prepared in step 1, sulfuric acid was not added for dilution, and other steps were the same as in example 1.

### Comparative example 3:

When the second ferrous solution was prepared in step 2, 1 kg of the ferrous sulfate heptahydrate was dissolved in 2 kg of water and the pH value was adjusted to 3 using sodium hydroxide, instead of using the method for preparing the phosphorus containing solution B. Other steps were the same as in example 1.

The samples obtained in examples and comparative examples were tested and characterized, the equipments and methods included: 1. Specific surface area (BET) detection: Tristar II 3020 specific surface area detector; 2. Content of metal elements: 5110ICP-OES spectrometer; 3. Iron element: GB/T 6730.66-2009; and 4. Phosphorus element: Quimociac gravimetric method. The detection data BET and Fe/P content are shown in Table 3, and the restricted metal element content of battery grade ferric phosphate is shown in Table 4.

**Table 3 BET and Fe/P content of samples obtained in examples and comparative examples**

| Source of samples | Mass fraction of Fe/(%) | Mass fraction of P/(%) | Molar ratio of Fe/P | Specific surface area (square meters per gram) |
|---|---|---|---|---|
| Example 1 | 36.38 | 20.87 | 0.9668 | 9.11 |
| Example 2 | 36.35 | 20.63 | 0.9772 | 9.03 |
| Example 3 | 35.92 | 20.61 | 0.9666 | 8.52 |
| Example 4 | 36.02 | 20.66 | 0.9647 | 8.95 |
| Comparative example 1 | 36.63 | 20.76 | 0.9786 | 8.89 |
| Comparative example 2 | 36.03 | 20.66 | 0.9672 | 8.86 |
| Comparative example 3 | 36.08 | 20.61 | 0.9709 | 9.12 |
| Comparative example 3 Retesting | 36.05 | 20.62 | 0.9696 | 8.94 |

**Table 4 Restricted metal element content of battery grade ferric phosphate**

| Sample Source | Mass fraction of metal element impurities (ppm) | | | | | | | | | | | | | |
|---|---|---|---|---|---|---|---|---|---|---|---|---|---|---|
| | Al | Ca | Cd | Co | Cr | Cu | K | Mg | Mn | Na | Ni | Pb | Ti | Zn |
| Example 1 | 30.45 | 3.3 | 0 | 3.51 | 5.49 | 0 | 15.84 | 18.1 | 21.02 | 1.12 | 4.59 | 16.37 | 2356.04 | 3.83 |
| Example 2 | 25.93 | 7.17 | 0 | 1.95 | 5.65 | 0.93 | 15.21 | 6.17 | 11.46 | 5.85 | 6.32 | 25.82 | 603.8 | 6.82 |
| Example 3 | 44.97 | 0.71 | 0 | 3.85 | 0 | 0 | 94.37 | 40.24 | 27.27 | 2.17 | 3.79 | 14.96 | 4189.46 | 3.58 |
| Example 4 | 31.04 | 4.78 | 0 | 3.4 | 5.88 | 0 | 23.02 | 19.62 | 22.66 | 1.05 | 4.13 | 15.4 | 2308.28 | 2.4 |
| Comparative example 1 | 24.99 | 1.55 | 0 | 4.55 | 0 | 0 | 30.87 | 35.27 | 25.54 | 6.02 | 4.17 | 17.89 | 2898.26 | 2.48 |
| Comparative example 2 | 26.72 | 4.27 | 0 | 3 | 4.56 | 0 | 15.74 | 31.48 | 23.11 | 2.2 | 3.76 | 13.85 | 1805.27 | 3.94 |
| Comparative example 3 | 5.42 | 80.79 | 0 | 1.82 | 11.38 | 0.64 | 3.95 | 5.09 | 17.02 | 1.54 | 3.5 | 13.91 | 1917.09 | 4.83 |
| Comparative example 3 Retesting | 4.58 | 2.53 | 0 | 0.64 | 3.33 | 0 | 18.95 | 0.25 | 6.63 | 0 | 3.02 | 16.58 | 484.27 | 0 |

Comparing the data in Table 3, due to the relatively low doping amount of titanium element, there is no significant change in the specific surface area, and a slight impact on the molar ratio of iron to phosphorus. The more the titanium element there is, the lower the ratio is, this is because the titanium element will replace the site of iron element.

The mass fractions of metal element impurities in Table 4 were compared:
1) It can be seen from the comparison between example 1 and comparative example 1 that the ratio of the first ferrous solution to the second ferrous solution is changed during the production, resulting in corresponding changes in the titanium content in the sample. When the mixing ratio is 4:1, the titanium content is 2356.04 ppm, and when the mixing ratio is 5:0, the titanium content is 2898.26 ppm. Compared with example 2, the mixing ratio of example 2 is 4:1, and the titanium content in the sample is 603.8 ppm. As can be seen from the comprehensive comparison, the maximum titanium doping amount of ferric phosphate produced by dissolving this batch of ferrous sulfate heptahydrate in pure water at a ratio of 1:2 is about 2,898 ppm. When the first and second ferrous solutions are mixed at different ratios, anhydrous ferric phosphate samples with corresponding titanium content can be obtained.
2) It can be seen from the comparison between example 1 and example 3 that when the source of titanium dioxide byproduct in the preparation of the first ferrous solution is changed, the titanium content in the sample has also changed. The titanium content in example 3 is 4,189.46 ppm, indicating that the maximum titanium content in this disclosure is related to the source of the first ferrous solution raw material. This is because the source of titanium element in this disclosure is the attached titanium of ferrous sulfate heptahydrate in the first ferrous solution, and the maximum content is affected thereby.
3) It can be seen from the comparison between example 1 and example 4 that when the source of raw material, i,e., titanium dioxide byproduct for the preparation of the second ferrous solution is changed, the final samples have no difference. This is because the use of the phosphorus containing solution B can remove impurities from the second ferrous solution, and thus the second ferrous solution has no influence on the composition of the sample. The second ferrous solution only serves to regulate the titanium content and is not affected by the source of raw materials.
4) In comparative example 2, sulfuric acid is not added to control the pH value during the production of the first ferrous solution. Compared with example 1, the titanium content in the final sample is decreased, this is because the pH value as dissolved in pure water during the production of the first ferrous solution is higher (the data measured is 2.1), causing some titanium ions to hydrolyze and form colloids, which are intercepted during filtration.
5) In comparative example 3, the production method of the second ferrous solution is changed to dissolution by pure water and the pH value is adjusted to a high level to control impurities. In the two tests, the impurity contents of aluminum element are only below 20% of that of the other samples, but the detected titanium elements are not in parallel, indicating that the distribution of titanium element in the sample is not uniform enough. This is because when the first and second ferrous solutions are mixed, the increase in pH value leads to hydrolysis of some titanium ions. Although hydrolysis does not reduce the amount of titanium element in this step, the colloids formed therefrom will make the dispersion of titanium element insufficient, and the final existing form of these titanium after the sintering step is only amorphous titanate or titanium dioxide.

From the above examples, it can be seen that this disclosure adopts a titanium containing ferrous sulfate raw material solution (preferably prepared from titanium dioxide byproduct) for mixing with a titanium free ferrous sulfate raw material solution, then the obtained mixed solution and a phosphorus source are oxidized to obtain a slurry containing ferric phosphate and titanium phosphate, which is subjected to aging, rinsing, drying and sintering sequentially to obtain the titanium doped anhydrous ferric phosphate material. In this disclosure, the addition of ferrous solution ingredients is mainly adjusted into two stages. The control of doping of titanium element in the final doped ferric phosphate product can be achieved through proportion adjustment, thereby making the content of titanium element in the final product stable and controllable. Meanwhile, the titanium doped anhydrous ferric phosphate product has a uniform nanoscale particle stacking morphology, which is conducive to its application in battery materials. In addition, this disclosure has the advantages of simple preparation, low energy consumption, and the use of the titanium attached to the ferrous sulfate heptahydrate from titanium dioxide byproduct. Prior to the reaction, the titanium element is stably present in an ionic form, which not only improves the quality of the final product but also realizes waste utilization.

It should be noted that this disclosure is not limited to the aforementioned embodiments. The above embodiments are only illustrative, and embodiments that have the substantially same composition and play the same acting role as the technical idea within the scope of technical solution of this disclosure are all included in the technical scope of this disclosure. In addition, other embodiments constructed by applying various variations that can be thought of by those skilled in the art and by combining some constituent elements of the embodiments without departing from the scope of the main idea of this disclosure are also included in the scope of this disclosure.

## Claims

1. A preparation method of a titanium doped anhydrous ferric phosphate material, wherein the preparation method comprises the following steps:
providing a titanium containing ferrous sulfate raw material solution and a titanium free ferrous sulfate raw material solution;
mixing the titanium containing ferrous sulfate raw material solution and the titanium free ferrous sulfate raw material solution to obtain a mixed solution;
mixing the mixed solution with an oxidant and a phosphorus source to obtain a slurry containing ferric phosphate and titanium phosphate; and
subjecting the slurry to aging, rinsing, drying, and sintering sequentially to obtain the titanium doped anhydrous ferric phosphate material.

2. The preparation method according to claim 1, wherein materials for preparing the titanium containing ferrous sulfate raw material solution and the titanium free ferrous sulfate raw material solution comprise a titanium dioxide byproduct, and a mass fraction of titanium in the titanium dioxide byproduct is 600 ppm to 4,200 ppm.

3. The preparation method according to claim 2, wherein a preparation step for providing the titanium containing ferrous sulfate raw material solution comprises:
dissolving the titanium dioxide byproduct with an acidic aqueous solution, then performing a solid-liquid separation to obtain the titanium containing ferrous sulfate raw material solution;
and/or, a preparation step for providing the titanium free ferrous sulfate raw material solution comprises:
mixing the titanium dioxide byproduct with a phosphorus containing solution, then performing a solid-liquid separation to obtain the titanium free ferrous sulfate raw material solution;
wherein the phosphorus containing solution comprises at least one of phosphoric acid or phosphates, and a mass fraction of phosphorus element in the phosphorus containing solution is 1,000 ppm to 3,000 ppm.

4. The preparation method according to claim 3, wherein pH values of the titanium containing ferrous sulfate raw material solution and the titanium free ferrous sulfate raw material solution are both 0.8-1.8.

5. The preparation method according to claim 3, wherein a mass ratio of the titanium dioxide byproduct to the phosphorus containing solution is 1:1.0-2.0.

6. The preparation method according to any one of claims 1 to 5, wherein in the step of obtaining the slurry containing ferric phosphate and titanium phosphate, the mixed solution is mixed with the oxidant and the phosphorus source at a molar ratio of iron element to phosphorus element to oxidant of 1:1.01-1.05:0.55-0.65.

7. The preparation method according to any one of claims 1 to 5, wherein the step of subjecting the slurry to aging, rinsing, drying, and sintering sequentially comprises:
heating the slurry to 80°C-98°C, maintaining the temperature for 1 hour-4 hours, and then rinsing with water to obtain a phosphorus containing rinsing solution and a filter cake;
drying the filter cake and then sintering at 550°C-750°C for 1 hour-4 hours to obtain the titanium doped anhydrous ferric phosphate material.

8. The preparation method according to claim 7, wherein the aging comprises adding phosphoric acid at a mole number of 10%-30% of the ferric phosphate.

9. A titanium doped anhydrous ferric phosphate material, wherein it is prepared by the preparation method of any one of claims 1 to 8, wherein the titanium doped anhydrous ferric phosphate material has a crystal structure of an anhydrous ferric phosphate and a nanoscale particle stacking morphology, and a Ti doping amount of the titanium doped anhydrous ferric phosphate material is less than or equal to 2 wt%.

10. The titanium doped anhydrous ferric phosphate material according to claim 9, wherein the Ti doping amount of the titanium doped anhydrous ferric phosphate material is less than or equal to 1 wt%.

11. The titanium doped anhydrous ferric phosphate material according to claim 9, wherein the Fe/P molar ratio of the titanium doped anhydrous ferric phosphate material is 0.96-1.01, and a specific surface area of the titanium doped anhydrous ferric phosphate material is 8 m²/g -10 m²/g.

12. A cathode electrode sheet, wherein the cathode electrode sheet comprises titanium doped lithium iron phosphate as an active material, which is prepared from the titanium doped anhydrous ferric phosphate material of any one of claims 9 to 11.

13. A secondary battery, wherein the secondary battery comprises the cathode electrode sheet of claim 12.

14. An electrical device, wherein the secondary battery comprises the secondary battery of claim 13.
